# EUROPEAN PATENT APPLICATION

(11) **EP 3 934 268 A1**
(43) Date of publication of application: **05.01.2022**
(21) Application number: 20900730.1
(22) Date of filing: 01.12.2020
(51) Int. Cl.: H04N 21/854

(54) **USER INTERACTION METHOD AND APPARATUS, AND DEVICE AND MEDIUM**

(30) Priority: 21.05.2020 CN 202010437954
(71) Applicant: Baidu Online Network Technology (Beijing) Co., Ltd., Beijing 100085 (CN)
(72) Inventor: ZHAO, Xiaokun, Beijing 100085 (CN); QIN, Zhiwei, Beijing 10085 (CN); SONG, Kun, Beijing 10085 (CN)
(74) Representative: Carangelo, Pierluigi
(86) International application number: PCT/CN2020/133080
(87) International publication number: WO 2021/232744

(57) **Abstract**

Provided are a user interaction method and apparatus, a device and a medium, which relates to the field of artificial intelligence. An implementation solution is as follows: acquiring current facial expression information of a user; determining a current smiling level of the user according to the current facial expression information; and performing a corresponding interaction operation according to the current smiling level.

## Description

This application claims priority to Chinese Patent Application No. CN202010437954.4 filed with the CNIPA on May 21, 2020, the disclosure of which is incorporated herein by reference in its entirety.

### TECHNICAL FIELD

The present application relates to computer technologies, for example, the field of artificial intelligence, and in particular to a user interaction method and apparatus, a device and a medium.

### BACKGROUND

As intelligent devices popularize, users perform interaction with a large amount of information through the intelligent devices every day. Among all types of interaction operations performed by the users using the intelligent devices, most of the interaction operations need to be completed manually by the users. For example, for a like operation, an information feedback operation and the like, the users need to manually touch or click controls displayed on the display screen of the intelligent devices to complete the corresponding interaction operations.

In the related art, since a user can only complete an interaction operation by clicking the interaction control displayed on the display screen of an intelligent device with a finger or by controlling the cursor, the requirement for triggering the interaction operation is high, not convenient for the user to perform the interaction operation and reducing the interaction experience of the user.

### SUMMARY

The following is a summary of the subject matter described herein in detail. The summary is not intended to limit the scope of the claims.

An embodiment of the present application provides a user interaction method and apparatus, a device and a medium.

The present application provides a user interaction method. The method includes the steps described below.

Current facial expression information of a user is acquired. A current smiling level of the user is determined according to the current facial expression information. A corresponding interaction operation is performed according to the current smiling level.

The present application further provides a user interaction apparatus. The apparatus includes an expression acquisition module, a level determination module and an operation performing module.

The expression acquisition module is configured to acquire current facial expression information of a user. The level determination module is configured to determine a current smiling level of the user according to the current facial expression information. The operation performing module is configured to perform a corresponding interaction operation according to the current smiling level.

The present discloses further provides an electronic device. The electronic device includes at least one processor and a memory in communication connection with the at least one processor.

The memory is configured to store an instruction executable by the at least one processor, and the instruction is executed by the at least one processor to cause the at least one processor to perform any preceding method in the embodiments of the present application.

The present application further provides a non-transient computer-readable storage medium storing a computer instruction for causing a computer to perform any preceding method in the embodiments of the present application.

Other aspects can be understood after the drawings and the detailed description are read and understood.

### BRIEF DESCRIPTION OF DRAWINGS

The drawings are used to provide a further understanding of the solutions and not to limit the present application.
FIG. 1 is a flowchart of a user interaction method according to an embodiment of the present application;
FIG. 2 is a flowchart of another user interaction method according to an embodiment of the present application;
FIG. 3A is a flowchart of another user interaction method according to an embodiment of the present application;
FIG. 3B is a schematic diagram of a like interaction process according to an embodiment of the present application;
FIG. 4 is a structure diagram of a user interaction apparatus according to an embodiment of the present application; and
FIG. 5 is a block diagram of an electronic device for implementing a user interaction method according to an embodiment of the present application.

### DETAILED DESCRIPTION

Example embodiments of the present application are described below in conjunction with the drawings. It is to be noted that if not in collision, the embodiments and features therein in the present application may be combined with each other. Similarly, for the sake of clarity and conciseness, the description of common functions and structures is omitted in the description below.

According to the embodiments of the present application, the present application provides a user interaction method.

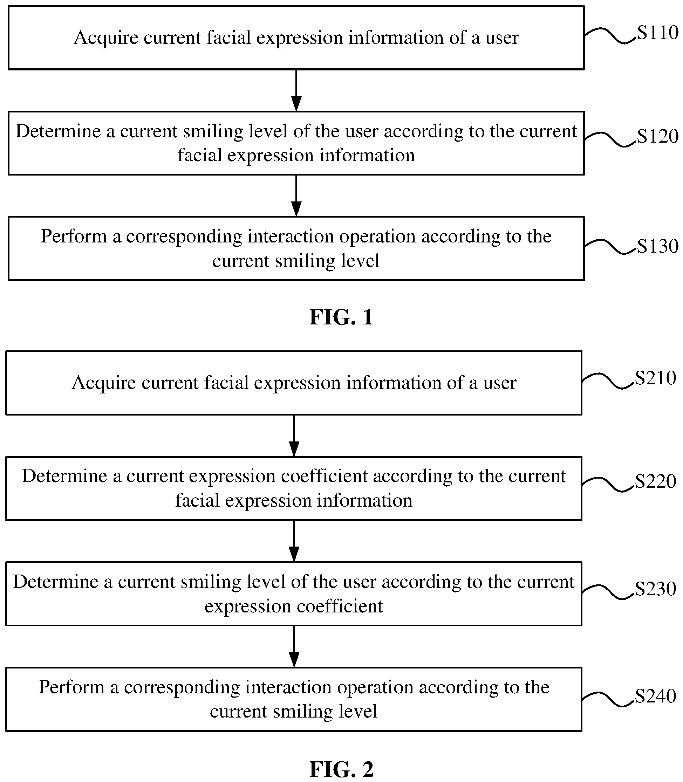

FIG. 1 shows a flowchart of a user interaction method according to an embodiment of the present application. The embodiment is applicable to the case where a like interaction is performed by using a user expression. The method may be executed by a user interaction apparatus which can be implemented by software and/or hardware and can generally be integrated in electronic devices such as a computer and a mobile phone.

In an embodiment, referring to FIG. 1, the method includes steps S110, S120 and S130.

In step S 110, current facial expression information of a user is acquired.

Among facial expressions, a smile is a natural and clear expression expressing approval. When receiving information, a user often gives feedback on the positive effect of the information through a smile. Base on this, in the embodiment, the current facial expression information of the user is acquired, a current smiling level is determined and thus a corresponding like interaction operation is performed. The embodiment may be applied to an application having a demand for user like interaction.

In the embodiment, the current facial expression information of the user may be information obtained after the current facial expression of the user is digitized. The manner of acquiring the current facial expression information of the user includes, but is not limited to, using local or external image capture equipment such as a camera to capture a facial image or video of the user in real time.

Exemplarily, when the user clicks and turns on an application having a demand for user like interaction on an electronic device, the camera of the device is turned on, and the facial image data of the user is captured in real time at a preset capture frequency and used as the current facial expression information of the user.

In step S120, a current smiling level of the user is determined according to the current facial expression information.

In the embodiment, since different smiling degrees can represent different approval degrees of the user, multiple smiling levels may be set, and different smiling levels correspond to different smiling degrees of the user. For example, a preset smiling level may include two levels: a not-smiling level and a smiling level. For example, a preset smiling level may also include four levels: a not-smiling level, a smile level, a laughter level and a guffaw level. Of course, the above is merely taken as examples, and other smiling levels may be set according to actual needs. The smiling level is not limited here.

Exemplarily, the smiling degree of the current facial expression information can be quantified by using a unified index parameter, and then the current smiling level corresponding to the current facial expression information can be determined according to the index parameter value obtained after the quantification.

The beneficial effects of setting different smiling levels in the embodiment are that: the current smiling level of the user is determined so that different approval degrees of the user are reflected, thereby improving the interaction precision and increasing the diversity of interaction operations.

In step S 130, a corresponding interaction operation is performed according to the current smiling level.

In the embodiment, different interaction operations may be performed correspondingly for different smiling levels. The interaction operations include, but are not limited to, a user interface (UI) interaction operation and a back-end logic operation.

Since different smiling levels correspond to different interaction operations, the user can truly and objectively reflect the degree of preference of the user for the liked object through a real-time expression, and a corresponding feedback interaction operation is automatically performed. Thereby, hands can be freed and the interaction process can be completed through the expression recognition ability, achieving the innovation in interaction. Meanwhile, the user interaction cost is reduced, the interaction process is more interesting, the positive feedback of the user given to the liked object is facilitated, the user interaction experience is improved, and the statistics of the interaction result information is facilitated.

The step of performing the corresponding interaction operation may include at least one of displaying a corresponding like effect picture or performing corresponding user feedback information statistics.

Exemplarily, the like interaction operations corresponding to different smiling levels may be correspondingly displaying different like effect pictures on the liked object display interface. In an example, if the current smiling level of the user is the smile level, a small heart is displayed on the current liked object display interface; if the current smiling level of the user is the laughter level, multiple small hearts are displayed on the current liked object display interface; if the current smiling level of the user is the guffaw level, a big heart is displayed in full screen on the liked object display interface; however, if the current smiling level of the user is the not-smiling level, the heart animation effect is not displayed on the liked object display interface. In this manner, the like process can be more interesting, and the enthusiasm of the user for user like interaction can be increased.

Additionally, in the embodiment, different smiling levels may also correspond to different user feedback information for statistics. For example, if the current smiling level of the user is the smile level, the liking degree of the user on the liked object is fed back as liking; if the current smiling level of the user is the laughter level, the liking degree of the user on the liked object is fed back as liking more; if the current smiling level of the user is the guffaw level, the liking degree of the user on the liked object is fed back as liking most; however, if the current smiling level of the user is the not-smiling level, the liking degree of the user on the liked object is fed back as dislike. In this manner, statistics can be performed on high-quality information without manual feedback by the user.

According to the technical solution of the embodiment, the current facial expression information of the user is acquired, the current smiling level of the user is determined according to the current facial expression information, and the corresponding interaction operation is performed according to the current smiling level of the user, solving the problem in the related art of inconvenient user interaction operations and low user interaction experience caused by the need for the user to manually complete the interaction operations, reducing the requirements for triggering different degrees of interaction operations by the user, providing convenience for the user to perform different degrees of interaction operations, and further improving the effect of user interaction experience.

On the basis of the preceding embodiment, the step of acquiring the current facial expression information of the user may include capturing, by an augmented reality (AR) engine, facial expression data of the user in real time at a set frequency as the current facial expression information of the user.

Exemplarily, in the process of acquiring the current facial expression information of the user, the user face model can be captured in real time through the augmented reality (AR) engine; meanwhile, the facial expression image data of the user can be captured in real time at a set sampling frequency and used as the current facial expression information of the user.

The advantage of using the AR engine to capture the facial expression data of the user is as follows: the capture precision can be improved, making the smiling recognition of the user more accurate and thus improving the accuracy and reliability of the interaction result.

According to an embodiment of the present application, the present application further provides a user interaction method.

FIG. 2 is a flowchart of another user interaction method according to an embodiment of the present application. The embodiment is a refinement of any preceding embodiment. The step of determining the current smiling level of the user according to the current facial expression information is refined to include determining a current expression coefficient according to the current facial expression information and determining the current smiling level of the user according to the current expression coefficient.

In an embodiment, referring to FIG. 2, the method includes steps S210, S220, S230 and S240.

In step S210, current facial expression information of a user is acquired.

In step S220, a current expression coefficient is determined according to the current facial expression information.

On the basis of the preceding embodiments, the embodiment uses the expression coefficient to quantify the smiling degree of the current facial expression information of the user. The range of the expression coefficient may be, for example, [0, 1].

Exemplarily, different expression coefficients can be obtained based on different facial expression information. For example, the current expression coefficient of the user can be determined through detection of the degree to which the corners of the mouth of the user rise in the current facial expression information. The greater the degree to which the corners of the mouth of the user rise, the greater the smiling degree of the user, and the greater the determined and obtained current expression coefficient. In a practical example, when the user smiles, the degree to which the corners of the mouth rise is small in the obtained current facial expression information, and the obtained current expression coefficient is determined to be small; when the user laughs or guffaws, the degree to which the corners of the mouth rise is relatively large in the obtained current facial expression information, and the obtained current expression coefficient is determined to be large.

The step of determining the current expression coefficient according to the current facial expression information may include inputting the current facial expression information into an expression recognition model to obtain the current expression coefficient outputted.

The expression recognition model may be a trained neural network model such as an artificial intelligence (AI) expression recognition model. In an example, the AR engine captures face information at a certain sampling rate, constructs a face model, and submits the face model to the AI expression recognition model for analysis and processing. The AI expression recognition model outputs an expression coefficient by comparing the face model generated by the AR engine with a preset expressionless face model.

The beneficial effects of using the expression recognition model to recognize facial expression information are as follows: the recognition process can be simplified, the recognition precision can be improved, and the recognition robustness can be enhanced.

In step S230, a current smiling level of the user is determined according to the current expression coefficient.

In the embodiment, different smiling levels may correspond to different expression coefficient value intervals. For example, the expression coefficient value interval corresponding to the not-smiling level may be set to [0, 2.5), the expression coefficient value interval corresponding to the smile level may be set to [2.5, 5), the expression coefficient value interval corresponding to the laughter level may be set to [5, 7.5), and the expression coefficient value interval corresponding to the guffaw may be set to [7.5, 1].

Exemplarily, after the current expression coefficient is determined, the smiling level corresponding to the current expression coefficient value, that is, the current smiling level of the user, can be determined according to the value interval in which the current expression coefficient value is located. In a practical example, if the value of the current expression coefficient is determined to be 0.3, the current smiling level of the user can be determined to be the smile level since the expression coefficient value interval corresponding to the smile level is [2.5, 5).

In step S240, a corresponding interaction operation is performed according to the current smiling level.

According to the technical solution of the embodiment, the current expression coefficient is determined according to the current facial expression information of the user, the current smiling level of the user is determined according to the current expression coefficient, and finally the corresponding interaction operation is performed according to the current smiling level. The smiling degree of the current facial expression information is quantified by the expression coefficient, thereby facilitating the division of smiling levels and improving the precision of the smiling recognition result.

According to an embodiment of the present application, the present application further provides a user interaction method.

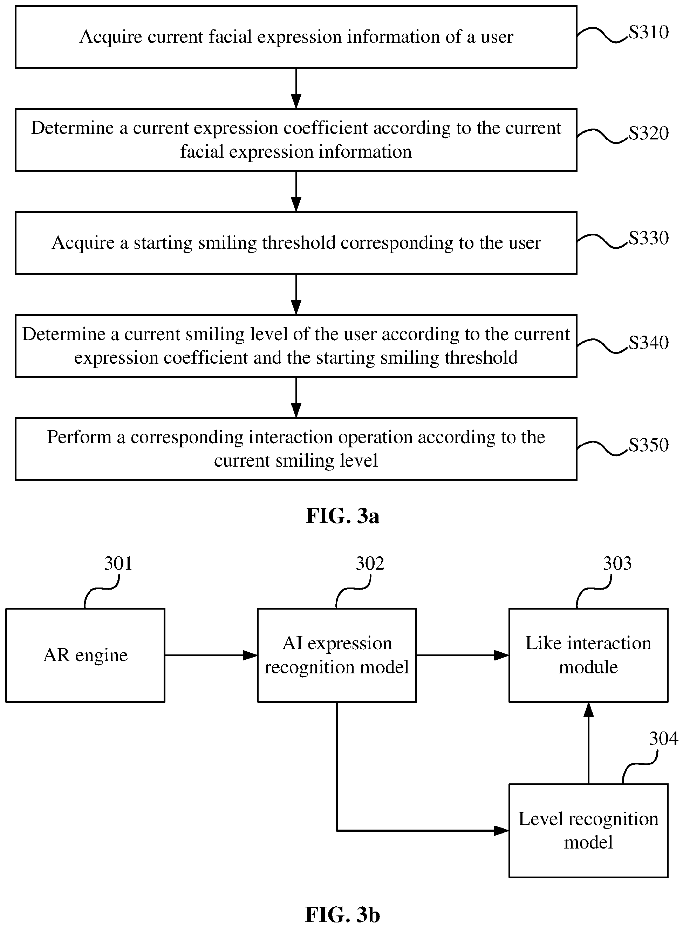

FIG. 3A is a flowchart of another user interaction method according to an embodiment of the present application. The embodiment is a refinement of any preceding embodiment. The step of determining the current smiling level of the user according to the current expression coefficient is refined to include acquiring a starting smiling threshold corresponding to the user and determining the current smiling level of the user according to the current expression coefficient and the starting smiling threshold.

In an embodiment, referring to FIG. 3A, the method includes steps S310, S320, S330, S340 and S350.

In step S310, current facial expression information of a user is acquired.

In step S320, a current expression coefficient is determined according to the current facial expression information.

In step S330, a starting smiling threshold corresponding to the user is acquired.

In the embodiment, the starting smiling threshold may be an expression coefficient boundary value for the determination of smiling and the determination of not smiling. That is, when the expression coefficient is greater than or equal to the starting smiling threshold, it is determined that smiling is present, otherwise, it is determined that no smiling is present. On the basis of the preceding embodiments, the embodiment sets different starting smiling thresholds for different users. Therefore, in determining the current smiling level of the user, a personalized starting smiling threshold corresponding to the user can be first acquired to determine a personalized value interval for the smiling level corresponding to the user.

Different users have different rising radians of the corners of the mouth under normal conditions and thus have different starting rising radians of the corners of the mouth when expressing the smiling. For example, some people have rich expressions and have relatively large rising radians of the corners of the mouth under normal conditions; some people are rarely smiling and have relatively small or even no rising radians of the corners of the mouth under normal conditions. Therefore, the embodiment sets different starting smiling thresholds for different users to improve the accuracy of smiling recognition.

The step of acquiring the starting smiling threshold corresponding to the user may include acquiring historical expression coefficients of the user, training a smiling threshold recognition model corresponding to the user by using the historical expression coefficients, and acquiring the starting smiling threshold corresponding to the user according to a training result of the smiling threshold recognition model, where the training result includes expression coefficient ranges of at least two smiling classifications.

In the embodiment, the historical expression coefficients may be expression coefficients obtained according to historical facial expression information of the user, where the historical facial expression information of the user is obtained through continuous capturing of the expression data of the user during the use of the application by the user. The manner of acquiring the historical expression coefficients includes, but is not limited to, sequentially inputting multiple pieces of historical facial expression information of the user captured at ordinary times into the expression recognition model to output the obtained multiple expression coefficients.

Exemplarily, after being acquired, the historical expression coefficients of the user can be used for unsupervised training of the smiling threshold recognition model corresponding to the user. The smiling threshold recognition model may be a preset neural network classification model. The inputted historical expression coefficients are gradually clustered into at least two smiling classifications through training. After the model converges, the expression coefficient ranges corresponding to the at least two smiling classifications can be obtained. Then, the starting smiling threshold corresponding to the user can be acquired according to the expression coefficient ranges corresponding to the at least two smiling classifications. The expression coefficient ranges corresponding to different smiling classifications may be discontinuous. Therefore, the manner of acquiring the starting smiling threshold includes, but is not limited to, acquiring the maximum value in the expression coefficient range corresponding to the smiling classification having the smallest expression coefficient value and the minimum value in the expression coefficient range corresponding to the smiling classification having a slightly larger expression coefficient value, and determining a certain value between the maximum value and the minimum value as the starting smiling threshold. Of course, the starting smiling threshold corresponding to the user may also be determined merely according to the expression coefficient range corresponding to the smiling classification having the smallest expression coefficient. The manner of acquiring of starting smiling threshold corresponding to the user is not limited here.

In the embodiment, the smiling threshold recognition model corresponding to the user is trained with the acquired historical expression coefficients, and then the continuously revised starting smiling threshold corresponding to the user is obtained. The beneficial effect is as follows: different starting smiling thresholds are set according to the personalized smiling characteristics of different users, thereby improving the accuracy of smiling recognition for different users and increasing the robustness of smiling recognition.

The step of acquiring the starting smiling threshold corresponding to the user according to the training result of the smiling threshold recognition model may include determining a smiling classification having a smallest expression coefficient value in the training result as a normal expression classification and determining a maximum value in an expression coefficient range corresponding to the normal expression classification as the starting smiling threshold corresponding to the user.

In the embodiment, the smiling classification having the smallest expression coefficient value in the training result may be used as the classification when the user is not smiling, that is, the normal expression classification. The user is not obviously smiling in the captured facial expression image in the normal expression classification, and the facial expression of the user can be considered as the normal expression of the user. Therefore, the maximum value in the expression coefficient range corresponding to the normal expression classification can be determined as the starting smiling threshold corresponding to the user.

Exemplarily, the maximum value in the expression coefficient range corresponding to the smiling classification having the smallest expression coefficient value in the training result is used as the starting smiling threshold corresponding to the user. In this manner, the beneficial effect is as follows: it is not necessary to pay attention to the expression coefficient ranges of other smiling classifications; even if the clustering effect of the model is not good, no much influence will be brought on the determination result of the starting smiling threshold, ensuring the accuracy of the starting smiling threshold and improving the real-time performance of acquiring the starting smiling threshold while simplifying the training process of the smiling threshold recognition model.

In step S340, a current smiling level of the user is determined according to the current expression coefficient and the starting smiling threshold.

In the embodiment, after the starting smiling threshold corresponding to the user is acquired, the smiling levels can be re-divided in combination with the starting smiling threshold, and then the smiling level corresponding to the current expression coefficient is determined according to the current expression coefficient and used as the current smiling level of the user.

The step of determining the current smiling level of the user according to the current expression coefficient and the starting smiling threshold may include determining level value intervals corresponding to at least two preset smiling levels according to the starting smiling threshold and determining the current smiling level of the user according to the current expression coefficient and the level value intervals corresponding to the at least two preset smiling levels.

Exemplarily, in determining the level value intervals corresponding to at least two preset smiling levels, the starting smiling threshold may be used as the starting threshold of the first preset smiling level other than the not-smiling level, and similarly in this manner, the starting thresholds of other smiling levels are determined according to preset interval spacing. Thereby, the level value interval of each preset smiling level is obtained. For example, the starting smiling threshold is set as the starting threshold of the smile level, and then the starting thresholds of all smiling levels are set with fixed interval spacing. For example, if the starting smiling threshold is 0.2, the level value interval of the not-smiling level is [0, 0.2), the level value interval of the smiling level is [0.2, 0.4), and so on. Of course, the level value intervals corresponding to the smiling levels may also be determined in other manners such as non-equal interval spacing. The manner is not limited here.

The embodiment acquires the personalized starting smiling threshold of the user to determine the personalized level value intervals of the preset smiling levels. The advantage of such setting is as follows: different level intervals can be divided according to the smiling difference between users, so that the current smiling level finally recognized is more accurate and the smiling recognition accuracy is improved.

In step S350, a corresponding interaction operation is performed according to the current smiling level.

According to the technical solution of the embodiment, on the basis of the preceding embodiments, the starting smiling threshold corresponding to the user is acquired and the current smiling level of the user is determined according to the current expression coefficient and the starting smiling threshold, so that the accuracy of smiling recognition is improved and the robustness of smiling recognition is enhanced.

On the basis of the preceding embodiments, for example, FIG. 3B shows a schematic diagram of a specific interaction process. An AR engine 301 is configured to capture facial expression data of a user according to a preset sampling rate, construct a face model, and transmit the face model to an AI expression recognition model 302. The AI expression recognition model 302 is configured to analyze the received face model, output an obtained current smiling expression coefficient, and transmit the current smiling expression coefficient to a like interaction module 303 and a smiling threshold recognition model 304. The smiling threshold recognition model 304 is configured to perform model training by using a current smiling expression coefficient less than a preset threshold as a normal expression coefficient and continuously revise the starting smiling threshold of the user. The like interaction module 303 is configured to determine the current smiling level of the user according to the current smiling expression coefficient and the starting smiling threshold and perform a corresponding like interaction operation according to the smiling level to like the current corresponding content.

According to an embodiment of the present application, the present application further provides a user interaction apparatus.

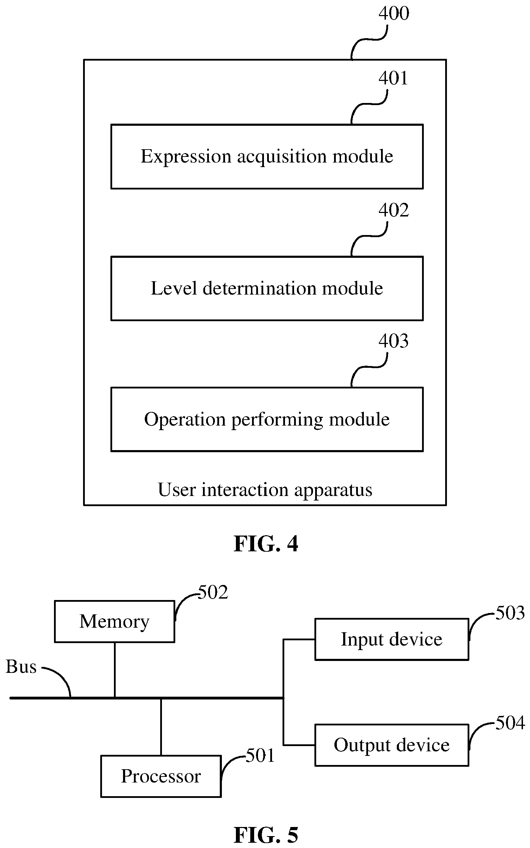

FIG. 4 is a structure diagram of a user interaction apparatus according to an embodiment of the present application. The apparatus may be implemented by software and/or hardware and perform the user interaction method of any preceding embodiment of the present application.

In an embodiment, a user interaction apparatus 400 includes an expression acquisition module 401, a level determination module 402 and an operation performing module 403.

The expression acquisition module 401 is configured to acquire current facial expression information of a user.

The level determination module 402 is configured to determine a current smiling level of the user according to the current facial expression information.

The operation performing module 403 is configured to perform a corresponding interaction operation according to the current smiling level.

The level determination module 402 may include a current coefficient determination sub-module and a current level determination sub-module.

The current coefficient determination sub-module is configured to determine a current expression coefficient according to the current facial expression information.

The current level determination sub-module is configured to determine the current smiling level of the user according to the current expression coefficient.

The current level determination sub-module may include a starting threshold acquisition unit and a smiling level determination unit.

The starting threshold acquisition unit is configured to acquire a starting smiling threshold corresponding to the user.

The smiling level determination unit is configured to determine the current smiling level of the user according to the current expression coefficient and the starting smiling threshold.

The starting threshold acquisition unit may include a historical coefficient acquisition sub-unit, a recognition model training sub-unit and a smiling threshold acquisition sub-unit.

The historical coefficient acquisition sub-unit is configured to acquire historical expression coefficients of the user.

The recognition model training sub-unit is configured to train a smiling threshold recognition model corresponding to the user by using the historical expression coefficients.

The smiling threshold acquisition sub-unit is configured to acquire the starting smiling threshold corresponding to the user according to a training result of the smiling threshold recognition model, where the training result includes expression coefficient ranges of at least two smiling classifications.

The smiling threshold acquisition sub-unit may be configured to:
determine a smiling classification having a smallest expression coefficient value in the training result as a normal expression classification; and
determine a maximum value in an expression coefficient range corresponding to the normal expression classification as the starting smiling threshold corresponding to the user.

The smiling level determination unit may include a level interval determination sub-unit and a user level determination sub-unit.

The level interval determination sub-unit is configured to determine level value intervals corresponding to at least two preset smiling levels according to the starting smiling threshold.

The user level determination sub-unit is configured to determine the current smiling level of the user according to the current expression coefficient and the level value intervals corresponding to the at least two preset smiling levels.

The current coefficient determination sub-module may be configured to input the current facial expression information into an expression recognition model to obtain the current expression coefficient outputted.

The expression acquisition module 401 may be configured to use an AR engine to capture facial expression data of the user in real time at a set frequency, and use the facial expression data of the user as the current facial expression information of the user.

The operation performing module 403 may be configured to perform at least one of:
displaying a corresponding like effect picture; or
performing corresponding user feedback information statistics.

The user interaction apparatus provided in the embodiment of the present application may perform the user interaction method of any embodiment of the present application and has functional modules and beneficial effects corresponding to the method. According to an embodiment of the present application, the present application further provides an electronic device and a readable storage medium.

FIG. 5 is a block diagram of an electronic device for implementing a user interaction method according to an embodiment of the present application. Electronic devices are intended to represent various forms of digital computers, for example, laptop computers, desktop computers, worktables, personal digital assistants, servers, blade servers, mainframe computers and other applicable computers. Electronic devices may also represent various forms of mobile devices, for example, personal digital assistants, cellphones, smartphones, wearable devices and other similar computing devices. Herein the shown components, the connections and relationships between these components, and the functions of these components are illustrative only and are not intended to limit the implementation of the present application as described and/or claimed herein.

As shown in FIG. 5, the electronic device includes one or more processors 501, a memory 502, and interfaces for connecting various components, including a high-speed interface and a low-speed interface. The components are interconnected to each other by different buses and may be mounted on a common mainboard or in other manners as desired. The processor may process instructions executed in the electronic device, including instructions stored in or on the memory to make graphic information of a graphical user interface (GUI) displayed on an external input/output device (for example, a display device coupled to an interface). In other embodiments, if required, multiple processors and/or multiple buses may be used with multiple memories. Similarly, multiple electronic devices may be connected, each providing some necessary operations (for example, a server array, a set of blade servers or a multi-processor system). FIG. 5 shows one processor 501 by way of example.

The memory 502 is the non-transitory computer-readable storage medium provided in the present application. The memory stores instructions executable by at least one processor to cause the at least one processor to perform the user interaction method provided in the present application. The non-transitory computer-readable storage medium of the present application stores computer instructions for causing a computer to perform the user interaction method provided in the present application.

The memory 502 as a non-transitory computer-readable storage medium is configured to store a non-transitory software program, a non-transitory computer-executable program, and modules, for example, program instructions/modules corresponding to the user interaction method provided in embodiments of the present application (for example, the expression acquisition module 401, the level determination module 402 and the operation performing module 403 shown in FIG. 4). The processor 501 executes non-transitory software programs, instructions and modules stored in the memory 502 to execute the various function applications and data processing of a server, that is, implement the user interaction method provided in the preceding method embodiments.

The memory 502 may include a program storage region and a data storage region. The program storage region may store an operating system and an application required by at least one function. The data storage region may store data created based on the use of the electronic device for performing the user interaction method. Additionally, the memory 502 may include a high-speed random-access memory and a non-transient memory, for example, at least one disk memory, a flash memory or another non-transient solid-state memory. In some embodiments, the memory 502 may include memories disposed remote from the processor 501, and these remote memories may be connected, through a network, to the electronic device for performing the user interaction method. Examples of the preceding network include, but are not limited to, the Internet, an intranet, a local area network, a mobile communication network and a combination thereof.

The electronic device for performing the user interaction method may further include an input device 503 and an output device 504. The processor 501, the memory 502, the input device 503 and the output device 504 may be connected by a bus or in other manners. FIG. 5 uses connection by a bus as an example.

The input device 503 can receive input number or character information and generate key signal input related to user settings and function control of the electronic device for performing the user interaction method. The input device 503 may be, for example, a touchscreen, a keypad, a mouse, a trackpad, a touchpad, a pointing stick, one or more mouse buttons, a trackball or a joystick. The output device 504 may be, for example, a display device, an auxiliary lighting device (for example, a light-emitting diode (LED)) or a haptic feedback device (for example, a vibration motor). The display device may include, but is not limited to, a liquid-crystal display (LCD), a light-emitting diode (LED) display or a plasma display. In some embodiments, the display device may be a touchscreen.

The various embodiments of the systems and techniques described herein may be implemented in digital electronic circuitry, integrated circuitry, an application-specific integrated circuit (ASIC), computer hardware, firmware, software and/or a combination thereof. The various embodiments may include implementations in one or more computer programs. The one or more computer programs are executable and/or interpretable on a programmable system including at least one programmable processor. The programmable processor may be a special-purpose or general-purpose programmable processor for receiving data and instructions from a memory system, at least one input device and at least one output device and transmitting the data and instructions to the memory system, the at least one input device and the at least one output device.

These computing programs (also referred to as programs, software, software applications or codes) include machine instructions of a programmable processor. These computing programs may be implemented in a high-level procedural and/or object-oriented programming language and/or in an assembly/machine language. As used herein, the term "machine-readable medium" or "computer-readable medium" refers to any computer program product, device and/or apparatus (for example, a magnetic disk, an optical disk, a memory or a programmable logic device (PLD)) for providing machine instructions and/or data for a programmable processor, including a machine-readable medium for receiving machine instructions as machine-readable signals. The term "machine-readable signal" refers to any signal used in providing machine instructions and/or data for a programmable processor.

In order that interaction with a user is provided, the systems and techniques described herein may be implemented on a computer. The computer has a display device (for example, a cathode-ray tube (CRT) or liquid-crystal display (LCD) monitor) for displaying information to the user; and a keyboard and a pointing device (for example, a mouse or a trackball) through which the user can provide input to the computer. Other types of devices may also be used for providing interaction with a user. For example, feedback provided for the user may be sensory feedback in any form (for example, visual feedback, auditory feedback or haptic feedback). Moreover, input from the user may be received in any form (including acoustic input, voice input or haptic input).

The systems and techniques described herein may be implemented in a computing system including a back-end component (for example, a data server), a computing system including a middleware component (for example, an application server), a computing system including a front-end component (for example, a client computer having a graphical user interface or a web browser through which a user can interact with implementations of the systems and techniques described herein) or a computing system including any combination of such back-end, middleware or front-end components. The components of the system may be interconnected by any form or medium of digital data communication (for example, a communication network). Examples of the communication network include a local area network (LAN), a wide area network (WAN) and the Internet.

The computing system may include clients and servers. A client and a server are generally remote from each other and typically interact through a communication network. The relationship between the client and the server arises by virtue of computer programs running on the respective computers and having a client-server relationship to each other.

According to the technical solution of the embodiment of the present application, the current facial expression information of the user is acquired, the current smiling level of the user is determined according to the current facial expression information, and the corresponding interaction operation is performed according to the current smiling level of the user, solving the problem in the related art of inconvenient user interaction operations and low user interaction experience caused by the need for the user to manually complete the interaction operations, reducing the requirements for triggering different degrees of interaction operations by the user, providing convenience for the user to perform different degrees of interaction operations, and further improving the effect of user interaction experience.

It is to be understood that various forms of the preceding flows may be used, with steps reordered, added or removed. For example, the steps described in the present application may be executed in parallel, in sequence or in a different order as long as the desired result of the technical solution disclosed in the present application is achieved. The execution sequence of these steps is not limited herein.

The scope of the present application is not limited to the preceding embodiments. It is to be understood by those skilled in the art that various modifications, combinations, sub-combinations and substitutions may be made depending on design requirements and other factors. Any modifications, equivalent substitutions, improvements and the like made within the spirit and principle of the present application are within the scope of the present application.

It is to be noted that while the present application is described in detail in connection with the preceding embodiments, the present application is not limited to the preceding embodiments and may include equivalent embodiments without departing from the concept of the present application. The scope of the present application is determined by the scope of the appended claims.

## Claims

1. A user interaction method, comprising:
acquiring current facial expression information of a user;
determining a current smiling level of the user according to the current facial expression information; and
performing a corresponding interaction operation according to the current smiling level.

2. The method of claim 1, wherein determining the current smiling level of the user according to the current facial expression information comprises:
determining a current expression coefficient according to the current facial expression information; and
determining the current smiling level of the user according to the current expression coefficient.

3. The method of claim 2, wherein determining the current smiling level of the user according to the current expression coefficient comprises:
acquiring a starting smiling threshold corresponding to the user; and
determining the current smiling level of the user according to the current expression coefficient and the starting smiling threshold.

4. The method of claim 3, wherein acquiring the starting smiling threshold corresponding to the user comprises:
acquiring historical expression coefficients of the user;
training a smiling threshold recognition model corresponding to the user by using the historical expression coefficients; and
acquiring the starting smiling threshold corresponding to the user according to a training result of the smiling threshold recognition model, wherein the training result comprises expression coefficient ranges of at least two smiling classifications.

5. The method of claim 4, wherein acquiring the starting smiling threshold corresponding to the user according to the training result of the smiling threshold recognition model comprises:
determining a smiling classification having a smallest expression coefficient value in the training result as a normal expression classification; and
determining a maximum value in an expression coefficient range corresponding to the normal expression classification as the starting smiling threshold corresponding to the user.

6. The method of claim 3, wherein determining the current smiling level of the user according to the current expression coefficient and the starting smiling threshold comprises:
determining level value intervals corresponding to at least two preset smiling levels according to the starting smiling threshold; and
determining the current smiling level of the user according to the current expression coefficient and the level value intervals corresponding to the at least two preset smiling levels.

7. The method of claim 2, wherein determining the current expression coefficient according to the current facial expression information comprises:
inputting the current facial expression information into an expression recognition model to obtain the current expression coefficient outputted.

8. The method of claim 1, wherein acquiring the current facial expression information of the user comprises:
capturing, by an augmented reality (AR) engine, facial expression data of the user in real time at a set frequency as the current facial expression information of the user.

9. The method of claim 1, wherein performing the corresponding interaction operation comprises at least one of:
displaying a corresponding like effect picture; or
performing corresponding user feedback information statistics.

10. A user interaction apparatus, comprising:
an expression acquisition module, which is configured to acquire current facial expression information of a user;
a level determination module, which is configured to determine a current smiling level of the user according to the current facial expression information; and
an operation performing module, which is configured to perform a corresponding interaction operation according to the current smiling level.

11. An electronic device, comprising:
at least one processor; and
a memory in communication connection with the at least one processor,
wherein the memory is configured to store an instruction executable by the at least one processor, and the instruction is executed by the at least one processor to cause the at least one processor to perform the method of any one of claims 1 to 9.

12. A non-transient computer-readable storage medium storing a computer instruction for causing a computer to perform the method of any one of claims 1 to 9.
